Europäisches Patentamt

European Patent Office

Office européen des brevets

(19)

(11) Publication number: **0 081 358**
**B1**

# EUROPEAN PATENT SPECIFICATION

(12)

(45) Date of publication of patent specification: **20.07.88**

(21) Application number: **82306455.5**

(22) Date of filing: **03.12.82**

(51) Int. Cl.⁴: **G 06 F 12/02,** G 06 F 9/38,
G 06 F 5/06

(54) **Data processing system providing improved data transfer between modules.**

(30) Priority: **04.12.81 US 327626**

(43) Date of publication of application:
**15.06.83 Bulletin 83/24**

(45) Publication of the grant of the patent:
**20.07.88 Bulletin 88/29**

(84) Designated Contracting States:
**BE DE FR GB IT NL SE**

(56) References cited:
**US-A-3 774 165**

**IBM TECHNICAL DISCLOSURE BULLETIN, vol.
17, no. 3, August 1974, pages 933-934, New
York, US; T.A. WILLIAMS: "High-speed
random-access memory with simultaneous
read/write operation"**

**IBM TECHNICAL DISCLOSURE BULLETIN, vol.
18, no. 11, April 1976, pages 3705-3706, New
York, US; F.J. AICHELMANN et al.: "Automatic
memory select during I-fetch operations"**

(73) Proprietor: **UNISYS CORPORATION
Burroughs Place
Detroit Michigan 48232 (US)**

(72) Inventor: **Flora, Laurence Paul
1381 N. Sunflower
Covina California 91724 (US)**

(74) Representative: **Kirby, Harold Douglas Benson
et al
G.F. Redfern & Company Marlborough Lodge 14
Farncombe Road
Worthing West Sussex BN11 2BT (GB)**

Courier Press, Leamington Spa, England.

## Description

### Background of the invention

This invention relates generally to data processing apparatus and, more particularly, to improved apparatus and methods for enhancing the performance of data processing operations.

In many types of data processing systems, each task is divided into several smaller pieces to permit concurrent performance of the task by several smaller data processors or modules. Although this approach permits each of these smaller data processing modules to be optimized for performance of its particular portion of the task, the transferring of the partially completed task between modules can involve considerable overhead.

For example, a typical way of implementing data transfers between modules in a system such as described above is to provide input and output scratchpad queues for each module so as to permit data to be asynchronously transferred between modules. In such an implementation, a sending module places data to be transferred in its output queue and then forgets about it. The output queue asynchronously transfers the data to the receiving module's input queue when it is available to receive the data. Then, when the receiving module requires the transferred data, it simply reads the data from its input queue. Although the use of input and output queues in this manner solves the problem of having to synchronize module operations, it has the disadvantage that the queue structure is expensive and also involves considerable overhead.

Of course, a more direct way of implementing data transfers between modules is to simply provide sufficient wiring between modules so that data can be directly transferred therebetween with little or no overhead penalty. However, such an approach not only requires a large and expensive interconnection structure, but also requires that the data be in registers rather than in more cost-effective scratchpads.

IBM Technical Disclosure Bulletin, Volume 18, No. 11, April 1976, pages 3705—3706 discloses a data processing system comprising an engine with a buffer containing four half-words. The engine reads half-words from the buffer and when an even half-word is read, the buffer areas that were previously vacated during engine use are re-written automatically from a memory array while the engine is operating on instructions from the buffer.

IBM Technical Disclosure Bulletin, Volume 17, No. 3, August 1974, pages 933—934 discloses a high speed random access memory with simultaneous read/write operation. The memory array and associated decode networks are partitioned into parallel sections so that read/write operations may be performed simultaneously through independent access circuits.

US—A—3 774 165 discloses apparatus for processing the flow of digital data encoded on a tape. The apparatus includes a memory in the form of a double buffer in which data may be simultaneously written into one portion and read out of another portion. Read and write accesses may occur simultaneously but they are handled successively in the buffer.

From one aspect the present invention relates to a data processing system comprising first and second portions; said second portion including a memory having a plurality of switchable pages; said second portion also including means for reading data from one of said pages for use in the performance of data processing operations while concurrently permitting data required for use in subsequent data processing operations to be written into a different one of said pages; said second portion further including means for switching said pages in a manner such that, after said second portion has completed data processing with respect to data in one page, the pages are switched so that another page can be read by said second portion while said one page becomes available to have new data written therein; and transferring means for writing data provided by said first portion into a page of said second portion which is available to have data written therein.

In accordance with this aspect the invention is characterised in that said system also includes a bi-stable device which is set by said transferring means to indicate to said reading means that a writing operation has been completed and is reset by said reading means to indicate to said transferring means that the pages have been switched so that said one page is available to have new data written therein.

From another aspect the invention relates to a method of operating a data processing system comprising a first and a second portion, said method comprising performing a data processing operation by said second portion by reading data from one page of a memory having a plurality of switchable pages while concurrently writing new data from said first portion in another page of said memory; and switching said pages by said second portion after each completion of data processing with respect to a page available for such use so that another page which has received data is now available for use in a data processing operation by said second portion while the page with respect to which data processing has been completed becomes available to receive new data from said first portion.

From this aspect the invention is characterised in that a bi-stable device is set when a data-writing operation from said first portion has been completed and is reset by said second portion to indicate that the pages have been switched so that said one page is available to have new data written therein.

### Brief description of the drawings

Fig. 1 is an overall block diagram illustrating a plurality of cooperating data processing modules which may advantageously incorporate the present invention.

Fig. 2 is a block diagram of a preferred implementation illustrating the cooperation provided between the fetch and execute modules of Fig. 1 in accordance with the invention.

Fig. 3 is a series of timing diagrams illustrating the timing relationships between the various signals transferred between the fetch and execute modules in Fig. 2.

Detailed description of the invention

Like numerals and characters designate like elements throughout the figures of the drawings.

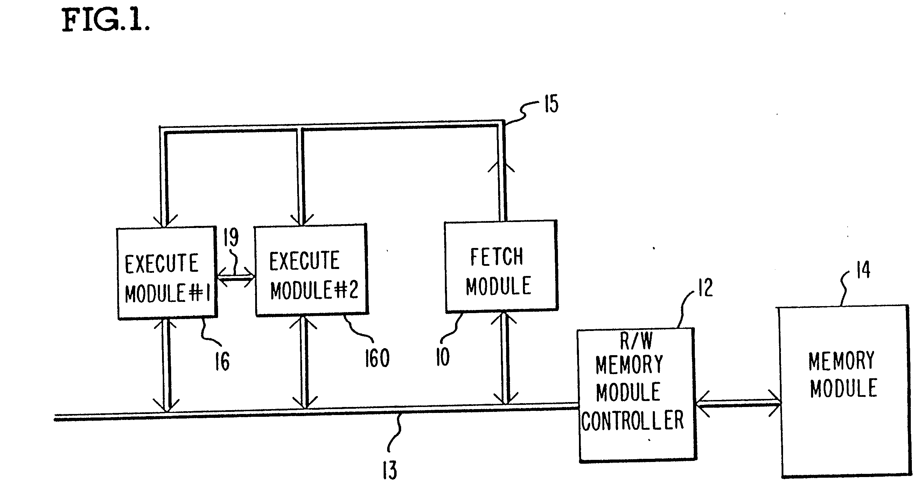

Referring initially to Fig. 1, illustrated therein is a block diagram of a plurality of cooperating data processing modules which may advantageously incorporate the present invention. As indicated in Fig. 1, a fetch module 10 cooperates with a read/write memory controller module 12 to access instructions from a memory module 14 via bus 13 for application to one or more execute modules (such as modules 16 and 116) via bus 15. Signals required between the execute modules 16 and 116 are applied via lines 19. Data involved in the data processing operations to be performed is transferred between the memory controller 12 and the respective fetch and execute modules 10, 16 and 116 also via bus 13.

More specifically, the fetch module 10 is specially designed to resolve the field lengths and addresses of the retrieved instructions prior to sending to the execute modules 16 and 116. Each of the execute modules 16 and 116 is specially designed to perform the data processing called for by the applied instructions, and may be configured in either a single or dual configuration. The memory controller module 12 interfaces the fetch module 10 and the execute modules 16 and 116 to the memory module 14.

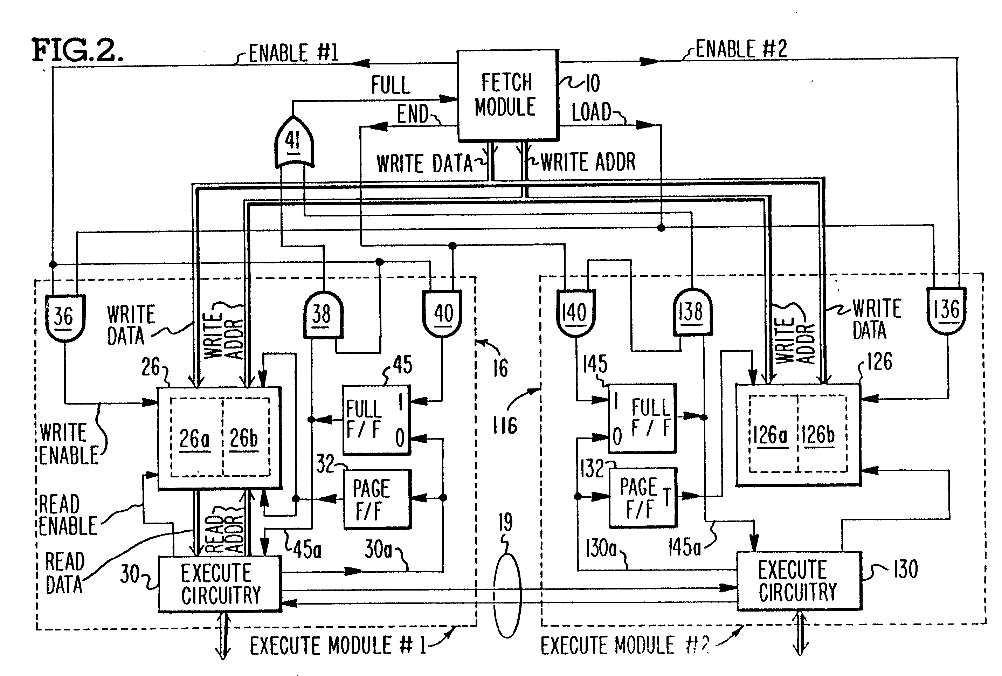

The present invention will be illustrated as applied to the fetch module 10 and the execute modules 16 and 116 in Fig. 1. For this purpose, attention is now directed to Fig. 2 which is a preferred implementation illustrating the cooperation provided between the fetch module 10 and the execute modules 16 and 116 in accordance with the invention.

As illustrated in Fig. 2, each of the execute modules 16 and 116 includes a scratchpad random access memory 26 or 126, respectively, each memory 26 and 126 being functionally divided into two pages 26a and 26b and 126a and 126b respectively. As will hereinafter be described in more detail, these two pages in each memory are switchable by their respective execute circuitry 30 or 130 after every instruction so that each page may alternately function as a fetch page to receive instruction data from the fetch module 10 and as an execute page for use by its respective execute circuitry in performing an instruction. Thus, while the execute circuitry 30 or 130 in an execute module is executing an instruction from one page, the fetch module 10 can fill up the other page with the data required for a succeeding instruction.

Furthermore, in the preferred embodiment, the memories 26 and 126 are chosen to be of the random access type and each location in the memory is designated to store a particular portion of the applied instruction data. Thus, the fetch module 10 can send its data to an execute module in any order for writing at appropriate designated addresses in the current fetch page; also, the execute circuitry after switching a fetch page for use as an execute page, can selectively read out the data from the appropriate designated addresses as required for executing the indicated instruction.

Before continuing with the description of Fig. 2, it should be noted that, in order to simplify the description of Fig. 2, references will hereinafter be made primarily to the construction and operation of execute module #1 identified by the numeral 16, which, for the purposes of this description, may be assumed to be identical to execute module #2 identified by the 100-greater numerical designation 116. For ease of comparison, components of execute module #2 are given 100-greater numerical designations than like components in execute module #1. Also, in order to simplify Fig. 2, clock inputs to the various components (which are conventional) are not shown, and should be assumed as provided where required.

Returning to the description of Fig. 2, a page flip-flop 32 is provided whose state is controlled by the execute circuitry 30, and whose output provides one bit of the write address or read address applied to the random access memory 26. The organization of the memory 26 is such that, when the page flip-flop 32 is in one state, an applied write address from the fetch module 10 causes accompanying write data to be written at the designated address in a first page of the memory 26, while concurrently permitting an applied read address from the execute circuitry 30 to read out data from the designated address in the other page of the memory. The opposite occurs when the page flip-flop 32 is in its other state—that is, when the page flip-flop is in its second state, an applied write address causes accompanying write data to be written at the designated address in the second page of the memory 26, while an applied read address causes data to be read out from the designated address in the first page of the memory 26. It will thus be evident that the two pages provided in each execute module memory 26 or 126 can be switched merely by switching the respective page flip-flop 32 or 132, which can be done very rapidly (for example, in a few nanoseconds).

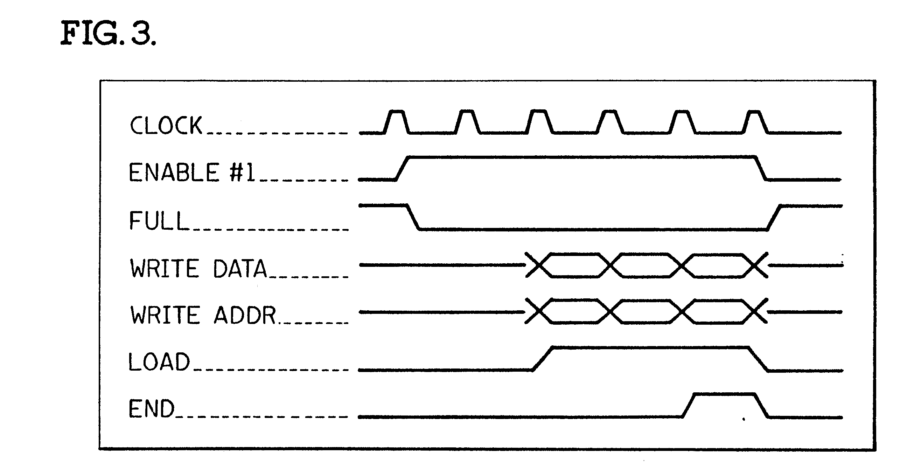

The construction and operation of the remaining portions of the execute module #1 will become evident from the following consideration of the signals applied between the fetch module 10 and execute module #1 during typical operations. For this purpose, attention is additionally directed to the timing diagram of Fig. 3 which illustrates the timing relationships between the various signals transferred between the fetch and execute modules during typical operation.

Typically, the fetch module 10 sends instructions alternately between execute modules #1 and #2 in order to speed up overall processing time. The required sequencing of instructions is enforced by signals sent via lines 19 between the execute circuitry 30 and 130 of the execute #1 and #2 modules. These signals act to prevent an execute module from changing machine state until the other module has completed execution of a previous instruction. The specific manner in which this is accomplished is not pertinent to the present invention and will thus not be further described; however, it is to be noted that such instruction sequencing control between modules can readily be provided by those skilled in the art.

For the purposes of the present description of Fig. 2 using the timing diagrams of Fig. 3, it will be assumed that, during the first clock indicated in the top graph in Fig. 3, the ENABLE #1 signal illustrated in the second graph in Fig. 3 becomes "1" (positive) which enables execute module #1 by enabling AND gates 36, 38 and 40. The enabling of AND gate 38 causes the current state of a full flip-flop 45 to be applied via an OR gate 41 to the fetch module 10 as a FULL signal, as illustrated in the third graph in Fig. 3. The state of the full flip-flop 45 and thus the enabled FULL signal indicates whether the enabled execute module #1 is ready to receive new instruction data—that is, whether the execute circuitry 30 has completed execution of its previous instruction and switched to the other page. The execute circuitry 30 manifests this instruction completion by applying, via output line 30a, a "1" signal to the page flip-flop 32 to switch the page in memory 26, while also applying this "1" signal to the full flip-flop 45 to switch its output to a "0" to indicate that the current fetch page is now available to receive new instruction data.

It will also be assumed that, when the fetch module 10 sends the ENABLE #1 signal to the execute module #1, the previous instruction has been completed so that the execute circuitry 30 will have switched to the next page and will have reset the full flip-flop 45 to the "0" state to indicate that the execute module #1 is ready to receive new instruction data. Thus, when the applied ENABLE #1 signal from the fetch module 10 enables AND gate 38 (along with AND gates 36 and 40), a "0" FULL signal is received by the fetch module 10, which is indicated in Fig. 3 by the FULL signal going negative. This "0" FULL signal permits the fetch module 10 to load a data word into execute module #1. This is accomplished by the fetch module 10 sending out to execute module #1 a LOAD signal along with a DATA word and an accompanying WRITE ADDRESS. The LOAD signal is applied, via AND gate 36 (which remains enabled by the ENABLE #1 signal) for use as a write enable signal for writing the transmitted DATA word into the memory 26 at the accompanying WRITE ADDRESS in the page designated by the output of the page flip-flop 32. As indicated in Fig. 3, the fetch module 10 can send a new DATA word and a different accompanying WRITE ADDRESS at each succeeding clock which will be written in memory 26 in a like manner.

When the fetch module 10 sends its last DATA word and accompanying WRITE ADDRESS, it also sends a "1" END signal to the execute #1 module. This "1" END signal passes, via AND gate 40 (which remains enabled by the ENABLE #1 signal) to the "1" input of the full flip-flop 45 to switch it to a "1" state to thereby indicate that the current page is full. At the next clock following the END signal (which is the last clock shown in Fig. 3), the ENABLE #1 and LOAD signals return to "0", while the ENABLE #2 signal becomes "1"; the FULL signal applied to the fetch module 10 thus now represents the status of the FULL flip-flop 145 on execute module #2. As pointed out previously, the full flip-flop 45 or 145 remains in a "1" state until its respective execute module #1 or #2 completes its previous instruction and switches the pages.

So far, it has been described how the fetch module 10 sends data words to specified addresses of the current fetch page, that is, the page designated by the page flip-flop 32 for storing data sent by the fetch module. While the fetch module 10 is writing into the current fetch page, the execute circuitry 30 is able to concurrently and selectively read out instruction data words stored in the other (or execute) page designated by the page flip-flop 32, as required in order to execute the indicated instruction. This is readily accomplished since the execute circuitry 30 need merely provide a read enable signal and READ ADDRESS to the memory 26 for each data word to be read out. Each applied READ ADDRESS in conjunction with the output from the page flip-flop 32 will then read out the selected READ DATA word from the designated address in the execute page. When the instruction is completed and the full flip-flop is "1", the execute circuitry 30 switches the state of the page flip-flop 32 to switch the pages and also resets the full flip-flop 45 to "0" to permit the next instruction data to be sent from the fetch module 10. Also, when the execute circuitry 30 completes an instruction, it sends a signal via one of lines 19 to the execute circuitry 130 of the execute module #2 for use in enforcing the proper sequencing of instructions.

It is to be understood that the present invention is also applicable for use in a system which employs multiple execute modules, wherein each module performs only a part of an overall job and then passes the job on to the next module. Accordingly, the present invention is to be considered as encompassing all possible apparatus and methods coming within the scope of the invention defined by the appended claims.

**Claims**

1. A data processing system comprising first (12, 14) and second (16) portions; said second portion including a memory (26) having a plurality of switchable pages (26a, 26b); said second portion also including means (30) for reading data from one of said pages for use in the performance of data processing operations while concurrently permitting data required for use in subsequent data processing operations to be written into a different one of said pages; said second portion further including means (30, 32) for switching said pages in a manner such that, after said second portion has completed data processing with respect to data in one page, the pages are switched so that another page can be read by said second portion while said one page becomes available to have new data written therein; and transferring means (10) for writing data provided by said first portion into a page of said second portion which is available to have data written therein, characterised in that said system also includes a bi-stable device (45) which is set by said transferring means (10) to indicate to said reading means (30) that a writing operation has been completed and is reset by said reading means (30) to indicate to said transferring means (10) that the pages have been switched (by 32) so that said one page is available to have new data written therein.

2. A system in accordance with Claim 1, wherein said memory (26) is selectively addressable, wherein the composite address applied to said memory is comprised of either a write address provided by said transferring means (10) or a read address provided by said reading means (30) along with a predetermined number of bits provided by said switching means (30, 32) which selects the particular page to which an applied write address or read address is to be applied.

3. A system in accordance with Claim 2, wherein said second portion provides for switching said pages by changing the value of said predetermined number of bits.

4. A system in accordance with Claim 3, wherein said memory is randomly accessible so as to permit each of said first and second portions to randomly address a selected location in the page selected by said predetermined number of bits.

5. A system in accordance with Claim 3, wherein said second portion includes means (32) for indicating which page is available to have new data written therein.

6. A system in accordance with any of Claims 2 to 5, wherein said memory comprises two pages, wherein said predetermined number of bits is a single bit, and wherein said second portion provides for switching said pages by changing the value of said single bit.

7. A system in accordance with any of the preceding Claims, wherein said first and second portions respectively comprise first and second modules each performing a predetermined function.

8. A system in accordance with Claim 7, wherein said second module is an execute module for performing data processing operations in response to instruction data read from a page of said memory.

9. A system in accordance with Claim 8, wherein said first module is a fetch module which provides instruction data to an available page in said memory via said transferring means.

10. A system in accordance with Claim 9, including a second execute module (116) of like construction as said first execute module (16) for alternately receiving instruction data from said fetch module via said transferring means.

11. A method of operating a data processing system comprising a first and a second portion, said method comprising performing a data processing operation by said second portion by reading data from one page of a memory having a plurality of switchable pages while concurrently writing new data from said first portion in another page of said memory; and switching said pages by said second portion after each completion of data processing with respect to a page available for such use so that another page which has received data is now available for use in a data processing operation while by said second portion the page with respect to which data processing has been completed becomes available to receive new data from said first portion; characterised in that a bi-stable device (45) is set when a data-writing operation from said first portion has been completed and is reset by said second portion to indicate that the pages have been switched so that said one page is available to have new data written therein.

12. A method in accordance with Claim 11, wherein data is written in and read from said memory using a composite address comprised of a read address or a write address along with a predetermined number of bits which determines the particular page to which an applied write address or read address is to be applied, and wherein the step of switching is performed by changing the value of said predetermined number of bits.

13. A method in accordance with Claim 12, wherein said reading from and writing in said memory is performed in a random manner.

14. A method in accordance with Claims 11, 12 or 13, wherein said memory comprises two pages, wherein said predetermined number of bits is a single bit, and wherein the step of switching is performed by changing the value of said single bit.

**Patentansprüche**

1. Datenverarbeitungssystem mit einem ersten (12, 14) und einem zweiten Bereich (16); welcher zweite Bereich einen Speicher (26) mit einer Mehrzahl von schaltbaren Seiten (26a, 26b) sowie Mittel (30) zum Auslesen von Daten aus einer der Seiten für die Durchführung von Datenverarbeitungsoperationen enthält, während gleichzeitig die für nachfolgende Datenverarbeitungsoperationen benötigten Daten in eine andere Seite eingeschrieben werden; welcher zweite Bereich darüber hinaus Mittel (30, 32) zum Schalten der Seiten in einer solchen Weise enthält, daß nach Abschluß der Datenverarbeitung in Bezug auf die Daten einer Seite durch den zweiten Bereich die Seiten so geschaltet werden, daß durch den zweiten Bereich eine andere Seite gelesen werden kann, während diese eine Seite für das Einschreiben neuer Daten frei wird; und mit Übertragungsmitteln (10) zum Einschreiben von Daten, die durch den ersten Bereich geliefert werden, in eine Seite des zweiten Bereiches, die zum Einschreiben frei ist; gekennzeichnet durch eine bistabile Schaltung (45), die durch die Übertragungsmittel (10) gesetzt wird, um den Lesemitteln (30) anzuzeigen, daß ein Schreibvorgang abgeschlossen ist, und die durch die Lesemittel (30) zurückgestellt wird, um den Übertragungsmitteln (10) anzuzeigen, daß die Seiten geschaltet (durch 32) wurden, so daß diese eine Seite zum Einschreiben neuer Daten frei ist.

2. System nach Anspruch 1, dadurch gekennzeichnet, daß der Speicher (26) selektiv adressierbar ist, und daß die dem Speicher zugeführte zusammengesetzte Adresse entweder aus einer durch die Übertragungsmittel (10) gelieferte Schreibadresse oder einer durch die Lesemittel (30) gelieferte Leseadresse sowie einer vorbestimmten Anzahl von Bits besteht, die durch die Schaltmittel (30, 32) geliefert werden, die eine bestimmte Seite auswählen, der die Schreibadresse oder Leseadresse zugeführt werden soll.

3. System nach Anspruch 2, dadurch gekennzeichnet, daß der zweite Bereich für das Schalten der Seiten sorgt, indem er den Wert der vorbestimmten Anzahl von Bits verändert.

4. System nach Anspruch 3, dadurch gekennzeichnet, daß der Speicher ein beliebig ansteuerbarer Speicher ist, der ein beliebiges Adressieren eines durch die vorbestimmte Anzahl von Bits ausgewählten Speicherplatzes in der Seite durch den ersten und zweiten Bereich ermöglicht.

5. System nach Anspruch 3, dadurch gekennzeichnet, daß der zweite Bereich Mittel (32) enthält, die anziegen, welche Seite zum Einschreiben von neuen Daten frei ist.

6. System nach einem der Ansprüche 2 bis 5, dadurch gekennzeichnet, daß der Speicher zwei Seiten enthält, daß die vorbestimmte Anzahl von Bits ein einziges Bit ist und daß der zweite Bereich das Schalten der Seiten durchführt, indem er den Wert dieses einzigen Bits verändert.

7. System nach einem der vorstehenden Ansprüche, dadurch gekennzeichnet, daß der erste und der zweite Bereich jeweils ein erstes und zweites Modul enthält, die vorbestimmte Funktionen erfüllen.

8. System nach Anspruch 7, dadurch gekennzeichnet, daß das zweite Modul ein Ausführungsmodul ist, das Datenverarbeitungsoperationen abhängig von Befehlsdaten durchführt, die aus einer Seite des Speichers ausgelesen werden.

9. System nach Anspruch 8, dadurch gekennzeichnet, daß das erste Modul ein Anforderungsmodul ist, das Befehlsdaten über die Übertragungsmittel an eine freie Seite des Speichers liefert.

10. System nach Anspruch 9, gekennzeichnet, durch ein zweites Ausführungsmodul (116), das den gleichen Aufbau wie das erste Ausführungsmodul (16) hat, zum abwechselnden Aufnehmen von Befehlsdaten von dem Anforderungsmodul über die Übertragungsmittel.

11. Verfahren zum Betrieb eines Datenverarbeitungssystems mit einem ersten und einem zweiten Bereich, bei dem durch den zweiten Bereich eine Datenverarbeitungsoperationen durch Auslesen von Daten aus einer Seite eines Speichers mit einer Mehrzahl von schaltbaren Seiten durchgeführt wird, während gleichzeitig neue Daten aus dem ersten Bereich in eine andere Seite des Speichers eingeschrieben werden; bei dem diese Seiten durch den zweiten Bereich nach jeder abgeschlossenen Datenverarbeitung gegenüber einer für eine Benutzung freien Seite geschaltet werden, so daß eine andere Seite, die Daten aufgenommen hat, nun für einen Datenverarbeitungsvorgang frei ist, während durch den zweiten Bereich die Seite, gegenüber der die Datenverarbeitung abgeschlossen wurde, zur Aufnahme neuer Daten von dem ersten Bereich frei wird, dadurch gekennzeichnet, daß eine bistabile Schaltung (45) gesetzt wird, wenn ein Datenschreibvorgang aus dem ersten Bereich abgeschlossen ist, und durch den zweiten Bereich zurückgestellt wird, um anzuzeigen, daß die Seiten geschaltet wurden, so daß diese eine Seite frei ist, um neue Daten aufzunehmen.

12. Verfahren nach Anspruch 11, dadurch gekennzeichnet, daß Daten in den Speicher geschrieben und aus diesem ausgelesen werden, indem eine zusammengesetzte Adresse benutzt wird, die aus einer Leseadresse oder einer Schreibadresse sowie einer vorbestimmten Anzahl von Bits besteht, die die Seite bestimmen, der eine Schreibadresse oder die Leseadresse zugeführt werden soll, und daß der Schritt des Schaltens durch Ändern des Wertes der vorbestimmten Anzahl von Bits erfolgt.

13. Verfahren nach Anspruch 12, dadurch gekennzeichnet, daß das Lesen aus dem Speicher und das Schreiben in diesen in beliebiger Ansteuerweise erfolgt.

14. Verfahren nach Anspruch 11, 12 oder 13, dadurch gekennzeichnet, daß der Speicher zwei Seiten enthält, daß die Anzahl von Bits ein einziges Bit ist und daß der Schritt des Schaltens durch Ändern des Wertes dieses einzigen Bits erfolgt.

## Revendications

1. Système de traitement de données comprenant une première et une seconde partie (12, 14 et 16), la seconde partie ayant une mémoire (26) avec un ensemble de pages commutables (26a, 26b), la seconde partie ayant également un moyen (30) pour lire les données de l'un des pages pour servir à l'exécution des opérations de traitement de données tout en permettant aux données nécessaires d'être utilisées dans les opérations de traitement suivantes des données, pour les inscrire dans une page différente, la seconde partie comprenant en outre les moyens (30, 32) pour commuter les pages de façon qu'après que chaque seconde partie ait terminé le traitement des données par rapport aux données d'une page, les pages sont commutées pour que la seconde partie puisse lire une autre page et qu'en même temps une page devienne disponible pour recevoir l'inscription de nouvelles données, ainsi qu'un moyen de transfert (10) pour inscrire des données fournies par la première partie, dans une page de la seconde partie disponible pour y recevoir l'inscription de données, système caractérisé en ce qu'il comporte un dispositif bistable (45) qui est mis à l'état par le moyen de transfert (10) pour indiquer au moyen de lecture (30) qu'une opération d'inscription a été terminée, ce dispositif bistable étant remis à l'état initial par le moyen de lecture (30) pour indiquer au moyen de transfert (10) que les pages ont été commutées (par le moyen 32), si bien qu'une page est disponible pour recevoir l'inscription de nouvelles données.

2. Système selon la revendication 1, caractérisé en ce que la mémoire (26) est adressable sélectivement, l'adresse composée fournie à la mémoire étant formée soit d'une adresse d'inscription fournie par le moyen de transfert (10) ou une adresse de lecture fournie par le moyen de lecture (30) ainsi qu'un nombre prédéterminé de bits fournis par le moyen de commutation (30, 32) et qui choisit la page particulière à laquelle est destinée une adresse d'inscription ou une adresse de lecture.

3. Système selon la revendication 2, caractérisé en ce que la seconde partie assure la commutation des pages en changeant la valeur du nombre prédéterminé de bits.

4. Système selon la revendication 3, caractérisé en ce que la mémoire est une mémoire vive permettant à chacune des première et seconde parties d'adresser de manière aléatoire une position choisie de la page, le choix étant fait par un nombre prédéterminé de bits.

5. Système selon la revendication 3, caractérisé en ce que la seconde partie comprend un moyen (32) pour indiquer la page qui est disponible pour recevoir l'inscription de nouvelles données.

6. Système selon l'une quelconque des revendications 2 à 5, caractérisé en ce que la mémoire se compose de deux pages, le nombre prédéterminé de bits est un bit unique et la seconde partie assure la commutation des pages en changeant l'état du bit unique.

7. Système selon l'une quelconque des revendications précédentes, caractérisé en ce que la première et la seconde partie se composent respectivement d'un premier et d'un second module qui exécutent chacun une fonction prédéterminée.

8. Système selon la revendication 7, caractérisé en ce que le second module est un module d'exécution pour effectuer des opérations de traitement de données en réponse aux données d'instructions lues d'une page de la mémoire.

9. Système selon la revendication 8, caractérisé en ce que le premier module est un module de saisie qui fournit des données d'instructions à une page disponible dans la mémoire par l'intermédiaire du moyen de transfert.

10. Système selon la revendication 9, caractérisé en ce qu'il comporte un second module d'exécution (116) de construction analogue à celle du premier module d'exécution (16) pour alternativement recevoir des données d'instructions du module de saisie par l'intermédiaire du moyen de transfert.

11. Procédé de mise en oeuvre d'un système de traitement de données comportant une première et une seconde partie, ce procédé consistant à effectuer une opération de traitement de données avec la seconde partie en lisant les données d'une page d'une mémoire comportant un ensemble de pages commutables tout en inscrivant simultanément de nouvelles données de la première partie dans une autre page de la mémoire et à commuter les pages par la seconde partie après chaque exécution d'un traitement de données par rapport à une page disponible pour cet usage de façon que l'autre page qui a reçu des données soit maintenant disponible pour une opération de traitement de données pendant que la page dont le traitement des données a été terminé par la seconde partie devient disponible pour recevoir des nouvelles données de la première partie, procédé caractérisé par un dispositif bistable (45) qui est mis à l'état lorsqu'une opération d'inscription de données par la première partie est terminée, ce dispositif étant remis à l'état initial par la seconde partie pour indiquer que les pages ont été commutées et qu'une page est disponible pour recevoir l'inscription de nouvelles données.

12. Procédé selon la revendication 11, caractérisé en ce que les données sont inscrites et lues dans la mémoire en utilisant une adresse composée et formée d'une adresse de lecture ou d'une adresse d'écriture ainsi que d'un nombre prédéterminé de bits déterminant la page particulière à laquelle est appliquée une adresse d'écriture ou une adresse de lecture, l'état de commutation se faisant en changeant la valeur du nombre prédéterminée de bits.

13. Procédé selon la revendication 12, caractérisé en ce que la lecture et l'inscription dans la mémoire se font de manière aléatoire.

14. Procédé selon les revendications 11, 12, 13, caractérisé en ce que la mémoire se compose de deux pages, le nombre prédéterminé de bits est égal à un et l'étape de commutation se fait en changeant l'état du bit unique.

# FIG.1.

0 081 358

FIG.2.

# FIG. 3.

| | |
|---|---|
| CLOCK | _⎍_⎍_⎍_⎍_⎍_⎍_ |
| ENABLE #1 | |
| FULL | |
| WRITE DATA | |
| WRITE ADDR | |
| LOAD | |
| END | |